# EUROPÄISCHE PATENTANMELDUNG

(11) **EP 2 624 390 A2**
(43) Veröffentlichungstag der Anmeldung: **07.08.2013**
(21) Anmeldenummer: 13154240.9
(22) Anmeldetag: 06.02.2013
(51) Int. Cl.: H02G 3/04, H02G 11/00

(54) **Leitungsführungssystem zur Aufnahme und Führung von Versorgungsleitungen sowie Werkzeugmaschine**

(30) Priorität: 06.02.2012 DE 102012002093
(71) Anmelder: DECKEL MAHO Pfronten GmbH, 87459 Pfronten (DE)
(72) Erfinder: Riedel, Sebastian, 87637 Eisenberg (DE); Garbarsky, Florian, 87488 Betzigau (DE)
(74) Vertreter: MERH-IP Matias Erny Reichl Hoffmann

(57) **Zusammenfassung**

Gemäß einer Ausführungsform der Erfindung wird ein Leitungsführungssystem zur Aufnahme und Führung von Versorgungsleitungen zwischen einem ersten Körper und einem zweiten Körper bereitgestellt, die gegeneinander um eine gemeinsame Drehachse über einen Drehwinkelbereich verdrehbar sind, derart, dass das Leitungsführungssystem aus einem ersten Verdrehungszustand in einen zweiten Verdrehungszustand überführbar ist. Das Leitungsführungssystem weist eine Mehrzahl von elastischen Führungssträngen zur jeweiligen Aufnahme von Versorgungsleitungen auf, wobei jeweilige erste Enden der Führungsstränge in dem ersten Befestigungsbereich angeordnet sind und jeweilige zweite Enden der Führungsstränge in dem zweiten Befestigungsbereich angeordnet sind. Der erste Befestigungsbereich und der zweite Befestigungsbereich sind hinsichtlich der gemeinsamen Drehachse axial voneinander beabstandet. Die Führungsstränge sind so ausgelegt, dass diese beim Überführen des Leitungsführungssystems in den ersten Verdrehungszustand jeweils ein erstes wendelförmiges Segment und ein zweites wendelförmiges Segment ausbilden, die jeweils wenigstens teilweise um die Drehachse verlaufen und über ein bogenförmiges Verbindungssegment miteinander verbunden sind. Das erste wendelförmige Segment verläuft entlang der ersten Windungsrichtung, und das zweite wendelförmige Segment verläuft entlang einer zweiten Windungsrichtung, die der ersten Windungsrichtung entgegengesetzt ist. Die Führungsstränge sind so ausgelegt, dass sich bei Überführen des Leitungsführungssystems in den zweiten Verdrehungszustand die jeweiligen bogenförmigen Verbindungselemente auflösen, derart, dass die Führungsstränge jeweils einen insgesamt wendelförmigen Verlauf entlang der ersten Windungsrichtung aufweisen.

## Beschreibung

Die Erfindung betrifft ein Leitungsführungssystem zur Aufnahme und Führung von Versorgungsleitungen zwischen einem ersten Körper und einem zweiten Körper, die gegeneinander um eine gemeinsame Drehachse über einen Drehwinkelbereich verdrehbar sind. Des Weiteren betrifft die Erfindung eine Werkzeugmaschine, die ein derartiges Leitungsführungssystem aufweist.

In Maschinen, die zwei gegeneinander verdrehbare Körper aufweisen, wie beispielsweise in Werkzeugmaschinen, ist es oftmals notwendig, Versorgungsleitungen mittels eines Leitungsführungssystems vom ersten Körper zum zweiten Körper zu führen. Ist beispielsweise am zweiten Körper ein Arbeitsgerät (z.B. eine Motorspindel) angebracht, so müssen in der Regel Versorgungsleitungen, die elektrische Signale und/oder Fluide zum Arbeitsgerät hin- bzw. von diesem wegtransportieren, vom ersten Körper zum zweiten Körper geführt werden. Da sich die Versorgungsleitungen beim gegenseitigen Verdrehen des ersten und zweiten Körpers mit verdrehen, und in der Regel fest mit dem ersten und mit dem zweiten Körper verbunden sind, können der erste und zweite Körper nur innerhalb eines definierten Drehwinkelbereichs gegeneinander verdreht werden. Um das Arbeitsgerät möglichst flexibel betreiben zu können, sollte der Drehwinkelbereich so groß wie möglich sein. Weiterhin sollte das Leitungsführungssystem eine möglichst große Anzahl an Versorgungsleitungen aufnehmen können und kompakt ausgestaltet sein. Leitungsführungssysteme, die Schleifringe bzw. Fluid-Drehdurchführungen verwenden, erfüllen diese Vorgaben, sind jedoch in der Regel sehr teuer in der Herstellung, da sie hochkomplexe Bauteile sind.

Die der Erfindung zugrunde liegende Aufgabe ist, ein Leitungsführungssystem zum Einsatz in Maschinen beliebiger Art, insbesondere zum Einsatz in Werkzeugmaschinen, bereitzustellen, das kostengünstig in der Herstellung und kompakt in seinen Abmessungen ist sowie eine Vielzahl von Versorgungsleitungen aufnehmen und führen kann.

Zur Lösung dieser Aufgabe stellt die Erfindung ein Leitungsführungssystem gemäß Patentanspruch 1 bereit. Weiterhin stellt die Erfindung eine Werkzeugmaschine gemäß Patentanspruch 15 bereit. Vorteilhafte Ausgestaltungen bzw. Weiterführungen des Erfindungsgedankens finden sich in den Unteransprüchen.

Gemäß einer Ausführungsform der Erfindung wird ein Leitungsführungssystem zur Aufnahme und Führung von Versorgungsleitungen zwischen einem ersten Körper und einem zweiten Körper bereitgestellt, die gegeneinander um eine gemeinsame Drehachse über einen Drehwinkelbereich verdrehbar sind, derart, dass das Leitungsführungssystem aus einem ersten Verdrehungszustand in einen zweiten Verdrehungszustand überführbar ist. Das Leitungsführungssystem weist eine Mehrzahl von beweglichen Führungssträngen zur jeweiligen Aufnahme von Versorgungsleitungen auf, wobei jeweilige erste Enden der Führungsstränge in dem ersten Befestigungsbereich angeordnet sind und jeweilige zweite Enden der Führungsstränge in dem zweiten Befestigungsbereich angeordnet sind. Der erste Befestigungsbereich und der zweite Befestigungsbereich sind hinsichtlich der gemeinsamen Drehachse axial voneinander beabstandet. Die Führungsstränge sind so ausgelegt, dass diese im ersten Verdrehungszustand des Leitungsführungssystems jeweils ein erstes wendelförmiges Segment und ein zweites wendelförmiges Segment ausbilden, die jeweils wenigstens teilweise um die Drehachse verlaufen und über ein bogenförmiges Verbindungssegment miteinander verbunden sind. Das erste wendelförmige Segment verläuft entlang der ersten Windungsrichtung, und das zweite wendelförmige Segment verläuft entlang einer zweiten Windungsrichtung, die der ersten Windungsrichtung entgegengesetzt ist. Die Führungsstränge sind so ausgelegt, dass sich bei Überführen des Leitungsführungssystems in den zweiten Verdrehungszustand die jeweiligen bogenförmigen Verbindungselemente auflösen, derart, dass die Führungsstränge jeweils einen insgesamt wendelförmigen Verlauf entlang der ersten Windungsrichtung aufweisen.

Unter den Begriff "wendelförmiges Segment" fällt erfindungsgemäß insbesondere ein Segment beliebiger Länge eines (gedachten) wendelförmigen Verlaufs. Wendelförmig im Sinne der Erfindung beinhaltet nicht zwangsläufig eine gleichbleibende Steigung sondern lediglich eine gleichbleibende Windungsrichtung.

Mit anderen Worten: Um die Drehachse sind mehrere nebeneinander verlaufende, gegeneinander versetzte Führungsstränge angeordnet, die jeweils einen insgesamt wendelförmigen Verlauf (zweiter Verdrehungszustand) oder teilweise einen wendelförmigen Verlauf (erster Verdrehungszustand) aufweisen. Die jeweiligen wendelförmigen Verläufe sind damit entlang einer Umfangsrichtung um die Drehachse ineinander "verschachtelt". Die Führungsstränge sind vorzugsweise jeweils über den gesamten Verlauf entlang der Drehachse gleichmäßig von der Drehachse beabstandet, unabhängig vom jeweiligen Verdrehungszustand. D.h., eine Beabstandung der Führungsstränge bezüglich der Drehachse bleibt konstant, wenn das Leitungsführungssystem aus dem ersten Verdrehungszustand in den zweiten Verdrehungszustand überführt wird, und umgekehrt. Alternativ können einander entsprechende Teile der Führungsstränge von der Drehachse gleichmäßig beabstandet sein, die Beabstandung der einzelnen Teile desselben Führungsstrangs von der Drehachse aber jeweils variieren.

Dadurch, dass eine Mehrzahl von Führungssträngen verwendet wird, kann eine hohe Anzahl an Versorgungsleitungen zwischen dem ersten Körper und dem zweiten Körper geführt werden. Dadurch, dass sämtliche Führungsstränge bei Überführen des Leitungsführungssystems aus dem ersten Verdrehungszustand die jeweiligen bogenförmigen Verbindungssegmente auflösen bzw. erzeugen (vorzugsweise, aber nicht notwendigerweise synchron), behindern sich die Führungsstränge nicht gegenseitig. Des Weiteren wird dadurch ermöglicht, die Längen der Führungsstränge bezüglich eines vorbestimmten Achsenabschnitts zu maximieren (Durch das Ausbilden der bogenförmigen Verbindungssegmente kann auf einer Umfangsfläche um die Drehachse ein zusätzlicher Teil an Führungssträngen untergebracht werden, womit die Länge der Führungsstränge erhöht werden kann). Dies wiederum ermöglicht es, den Drehwinkelbereich, über den der erste Körper und der zweite Körper gegeneinander verdrehbar sind, zu maximieren. Zudem ist die für einen bestimmten Drehwinkel erforderliche Stranglänge minimiert. Die bogenförmigen Verbindungssegmente bilden sich hierbei definiert reproduzierbar aus und lösen sich definiert reproduzierbar auf. D.h., ein Drehwinkelbereich gegenseitiger Verdrehung des ersten und zweiten Körpers zueinander, innerhalb dessen sich die bogenförmigen Verbindungssegmente ausbilden bzw. auflösen, sowie die Form der ausgebildeten Bögen bleiben konstant (oder ändern sich aufgrund von Verschleißerscheinungen nur marginal), unabhängig davon, wie oft bereits zwischen dem ersten Verdrehungszustand und dem zweiten Verdrehungszustand hin- und hergewechselt wurde. Dies bedeutet insbesondere, dass die bogenförmigen Verbindungssegmente nicht aufgrund wechselnder, zufälliger Einflüsse in variierenden Drehwinkelbereichen und in variierenden Formen ausgebildet werden. "Auflösen" eines bogenförmigen Verbindungssegments bedeutet in diesem Zusammenhang nicht zwingend, dass innerhalb eines Führungsstrangs der Windungsverlauf überall dieselbe Steigung hat, sondern kann auch bedeuten, dass eine Krümmung des bogenförmigen Teilstücks so gering ist, dass innerhalb des bogenförmigen Verbindungssegments nicht die Windungsrichtung des Führungsstrangs geändert wird, sondern lediglich die Steigung der Windung des Führungsstrangs.

Gemäß einer Ausführungsform der Erfindung beträgt der Drehwinkelbereich wenigstens 370°. In diesem Fall können beispielsweise der erste Körper und der zweite Körper, ausgehend von einer Grundstellung, gegeneinander in positiver und negativer Drehrichtung in eine - 185°-Stellung oder eine + 185°-Stellung gegeneinander verdreht werden. Auf diese Weise wird ein Schwenkbereich von 360° vollständig abgedeckt sowie in jeder Verdrehungs-Endlage (+180°/-180°) 5° zusätzlicher Schwenkbereich "Überfahrweg" garantiert.

Gemäß einer Ausführungsform der Erfindung liegt bei einem maximalen Drehwinkelbereich von 370° der Umschlagspunkt, an dem sich das bogenförmige Verbindungssegment auflöst, im Winkelbereich von 100° bis 150°, insbesondere im Bereich 115° bis 135°, was es erlaubt, bei vorgegebener axialer Länge und vorgegebenem Drehwinkel die erforderliche Führungsstranglänge zu minimieren, wodurch wiederum die Zahl an Führungssträngen, die sich entlang eines Achsenabschnitts winden, maximiert werden kann.

Die Führungsstränge sind vorzugsweise Führungsketten bzw. Schläuche, die in drei Raumrichtungen bewegt/verbogen/verdrillt werden können. Dies ermöglicht es, die Führungsstränge verspannungsfrei wendelförmig um die Drehachse zu führen.

Sind die Führungsstränge als Führungsketten ausgelegt, so sind gemäß einer Ausführungsform der Erfindung die Kettenglieder so ausgestaltet, dass ein minimaler Biegeradius der Führungsketten in alle drei Richtungen nicht unterschritten werden kann, um die Versorgungsleitungen vor zu starkem Biegen zu schützen. Durch das Bilden bzw. Auflösen der bogenförmigen Verbindungselemente (Umschlagspunkte) kann bewirkt werden, dass bei Verdrehen des ersten und zweiten Körpers gegeneinander entsprechende Wendel-Durchmesser, die von den ersten wendelförmigen Segmenten und den zweiten wendelförmigen Segmenten ausgebildet werden, jeweils konstant bleiben. Dies wiederum ermöglicht es, das Leitungsdurchführungssystem kompakt zu halten, da sich die wendelförmigen Segmente bei gegenseitigem Verdrehen nicht radial ausdehnen.

Gemäß einer Ausführungsform der Erfindung ist eine Mehrzahl von Führungselementen vorgesehen, die jeweils mit dem ersten Körper verbunden sind und wendelförmig entlang der ersten Windungsrichtung verlaufen, wobei die Führungselemente so ausgestaltet sind und mit den Führungssträngen so in Wirkverbindung stehen (d.h. diese führen), dass den ersten Enden zugewandte Endabschnitte der Führungsstränge sowohl im ersten Verdrehungszustand als auch im zweiten Verdrehungszustand einen wendelförmigen Verlauf entlang der ersten Windungsrichtung aufweisen. Die Führungselemente garantieren somit, dass unabhängig vom momentanen Verdrehungszustand zumindest ein Teil jedes Führungsstrangs einen wendelförmigen Verlauf entlang der ersten Windungsrichtung aufweist. Hierdurch kann auch garantiert werden, dass die Stellen, an denen sich die bogenförmigen Verbindungssegmente verbinden, nicht beliebig, sondern definiert und nur innerhalb eines begrenzten Bereichs entlang der Drehachse ausgebildet werden.

Die Führungselemente können beispielsweise so angeordnet sein, dass im ersten Verdrehungszustand jeder Führungsstrang auf je einem der Führungselemente aufliegt, und dass bei Überführen des zweiten Verdrehungszustands in den zweiten Verdrehungszustand die Führungsstränge von den Führungselementen abheben. In dieser Ausführungsform garantieren die Führungselemente, dass die Führungsstränge nicht aufeinander aufliegen können, was zu gegenseitigen Behinderungen (z.B. Verhaken) führen könnte. Weiterhin wird dadurch verhindert, dass im Falle von Führungssträngen, die ein hohes Gewicht aufweisen, Quetscherscheinungen auftreten, indem auf einem Führungsstang ein oder mehrere weitere Führungsstränge aufliegen.

Der erste Körper kann einen ersten Hohlkörper aufweisen, der um die Drehachse herum ausgebildet ist, wobei einer der Führungsstränge auf einer Außenseite des ersten Hohlkörpers verlaufen kann.

Weiterhin kann der erste Körper einen zweiten Hohlkörper aufweisen, der um den ersten Hohlkörper herum ausgebildet ist. Wenigstens einer der Führungsstränge kann auf einer Außenseite des zweiten Hohlkörpers verlaufen. Hierdurch können die Führungsstränge auf zwei unterschiedliche Wendelradien aufgeteilt werden, so dass die Anzahl der Führungsstränge erhöht werden kann.

Wenigstens einer der Führungsstränge kann innerhalb eines ersten Hohlraums verlaufen, der zwischen dem ersten Hohlkörper und dem zweiten Hohlkörper ausgebildet ist. Durch das Ausbilden eines derartigen Hohlraums wird eine zusätzliche Führung der Führungsstränge gewährleistet. Insbesondere kann auf diese Weise gewährleistet werden, dass der Radius der wendelförmigen Segmente, die innerhalb des ersten Hohlraums verlaufen, bei gegenseitigem Verdrehen des ersten und zweiten Körpers weder zu- noch abnimmt.

Weiterhin kann der erste Körper einen dritten Hohlkörper aufweisen, der um den zweiten Hohlkörper herum ausgebildet ist, wobei wenigstens einer der Führungsstränge innerhalb eines zweiten Hohlraums verläuft, der zwischen dem zweiten Hohlkörper und dem dritten Hohlkörper ausgebildet ist. Hierdurch können die Führungsstränge auf zwei unterschiedliche Hohlräume mit unterschiedlichen Wendelradien aufgeteilt werden, so dass die Anzahl der Führungsstränge erhöht werden kann.

Der erste und zweite Hohlkörper können jeweils länger als der dritte Hohlkörper ausgestaltet sein. Dies ist beispielsweise dann von Vorteil, wenn innerhalb des zweiten Hohlkörpers Führungsstränge verlaufen, deren Länge geringer ausfallen muss als die Länge der Führungsstränge, die innerhalb des ersten Hohlraums verlaufen.

Gemäß einer Ausführungsform der Erfindung kann der zweite Körper einen ersten Teil aufweisen, der innerhalb oder an einem Ende des ersten Hohlraums drehbar um den ersten Hohlkörper angeordnet ist, und an dem ein zweites Ende wenigstens eines Führungsstrangs befestigt ist. Weiterhin kann der zweite Körper einen zweiten Teil aufweisen, der innerhalb oder an einem Ende des zweiten Hohlraums drehbar um den zweiten Hohlkörper angeordnet ist, und an dem ein zweites Ende wenigstens eines Führungsstrangs befestigt ist. Ein Arbeitsgerät, beispielsweise eine Motorspindel, kann mit dem zweiten Körper fest verbunden sein. Der erste Teil sowie der zweiten Teil des zweiten Körpers können fest miteinander verbunden sein.

Gemäß einer Ausführungsform der Erfindung nehmen die Führungsstränge, die durch den ersten Hohlkörper verlaufen, Leitungen aufnehmen, die Medien transportieren, und die Führungsstränge, die durch den zweiten Hohlkörper verlaufen, Leitungen auf, die elektrische Signale transportieren. Dies ist insbesondere in dem Fall sinnvoll, in dem die Führungsstränge, die elektrische Leitungen führen, eine maximale Anzahl an Versorgungsleitungen aufnehmen. In diesem Fall sind nämlich in der Regel Führungsstränge, die elektrische Leitungen führen, weniger leicht verdrillbar als Führungsstränge, die Fluidleitungen führen, und somit ist das Verdrillen der Führungsstränge, die elektrische Leitungen führen, um einen Hohlkörper mit erhöhtem Durchmesser herum leichter.

Die Führungsstränge, die durch den ersten Hohlkörper verlaufen, können sowohl im ersten als auch im zweiten Verdrehungszustand parallel zueinander verlaufen, und die Führungsstränge, die durch den zweiten Hohlkörper verlaufen, können sowohl im ersten als auch im zweiten Verdrehungszustand parallel zueinander verlaufen. Damit ist ein maximal komplikationsfreies Führen der Führungsstränge möglich, da sich diese nicht gegenseitig behindern.

In allen Ausführungsformen können die Führungsstränge gleichmäßig voneinander beabstandet angeordnet sein, um komplikationsfreies Führen der Führungsstränge zu gewährleisten.

Der zweite Körper kann ein Führungselement aufweisen, das zwischen den zweiten Enden und den ersten Enden der Führungsstränge angeordnet ist, wobei das Führungselement so ausgestaltet ist, dass durch Drehen des Führungselements die jeweiligen Orte der Führungsstränge, an denen die ersten wendelförmigen Segmente in die zweiten wendelförmigen Segmente übergehen, geändert werden. Dadurch wird, wie bereits erwähnt, ein kontrolliertes Führen der Führungsstränge gewährleistet.

Das Führungselement kann beispielsweise ein Führungsring sein, der so angeordnet ist, dass jeder Führungsstrang durch jeweils eine von mehreren Öffnungen, die in dem Führungsring ausgebildet sind, hindurch verläuft. Der Führungsring kann beispielsweise innerhalb des zweiten Hohlraums angeordnet sein und konzentrisch um die Drehachse oder den ersten Hohlkörper herum verlaufen. Dies ermöglicht es, einen Teil der Führungsstränge durch den Führungsring zu stützen, was bei einer maximalen Befüllung der Führungsstränge mit Versorgungsleitungen und dem daraus resultierenden hohen Gewicht der Führungsstränge die Führungsstränge entlastet.

Der Führungsring kann so mit dem zweiten Körper (z.B. mit dem zweiten Teil des zweiten Körpers) verbunden sein, dass bei Überführen des Leitungsführungssystems in den zweiten Verdrehungszustand der Führungsring so mitgedreht wird, dass der Teil der Führungsstränge, der sich zwischen dem Führungsring und den zweiten Enden der Führungsstränge befindet, einen Teil der wendelförmigen Ausrichtung der Führungsstränge bildet, wobei der Führungsring bei Überführen des Leitungsführungssystems in den ersten Verdrehungszustand so gedreht wird, dass der Teil der Führungsstränge, der sich zwischen dem Führungsring und den zweiten Enden der Führungsstränge befindet, die zweiten wendelförmigen Segmente der Führungsstränge bildet.

Die Erfindung stellt weiterhin eine Werkzeugmaschine mit einem erfindungsgemäßen Leitungsführungssystem bereit,

Die Werkzeugmaschine kann ein Arbeitsgerät aufweisen, das auf dem zweiten Körper angeordnet ist und mit diesem gegenüber dem ersten Körper verdrehbar ist, wobei die durch die Leitungsführungssystem geführten Versorgungsleitungen zur Versorgung des Arbeitsgeräts mit elektrischen Signalen und Fluiden oder zum Abführen von elektrischen Signalen und Fluiden von dem Arbeitsgerät dienen.

Die Erfindung stellt weiterhin eine Werkzeugmaschine mit einem Leitungsführungssystem gemäß einer der beschriebenen bzw. folgenden Ausführungsformen bereit.

Die Erfindung wird im Folgenden unter Bezugnahme auf die Figuren in beispielsweiser Ausführungsform näher erläutert. Es zeigen:
Figur 1 eine perspektivische Darstellung eines Leitungsführungssystems gemäß einer Ausführungsform der Erfindung;
Figuren 2a) - 2d) das in Fig. 1 gezeigte Leitungsführungssystem in verschiedenen Verdrehungszuständen;
Figuren 3a) - 3b) Querschnittsdarstellungen von einem Teil von Führungsstrang-Befestigungsbereichen des in Fig. 1 gezeigten Leitungsführungssystems;
Figur 4 eine perspektivische Darstellung eines Leitungsführungssystems gemäß einer Ausführungsform der Erfindung;
Figuren 5a) - 5d) perspektivische Darstellungen verschiedener Verdrehungszustände des in Fig. 4 gezeigten Leitungsführungssystems;
Figur 6 das in Fig. 4 gezeigte Leitungsführungssystem in einer weiteren perspektivischen Darstellung;
Figuren 7a) - 7b) Querschnittsdarstellungen von einem Teil von Versorgungsstrang-Befestigungsbereichen des in Fig. 4 gezeigten Leitungsführungssystems;
Figur 8 eine Querschnittsdarstellung eines Leitungsführungssystems, das eine Kombination aus den in Figuren 1 und 4 gezeigten Leitungsführungssystemen darstellt;
Figur 9 eine perspektivische Darstellung des in Fig. 8 gezeigten Leitungsführungssystems und
Figur 10 eine schematische Darstellung eines Drehwinkelbereichs, der mit den in Figuren 1, 4 und 8 gezeigten Leitungsführungssystemen gemäß einer Ausführungsform der Erfindung erzielbar ist.

In den Figuren sind identische bzw. einander entsprechende Bereiche, Bauteile oder Bauteilgruppen mit denselben Bezugsziffern gekennzeichnet.

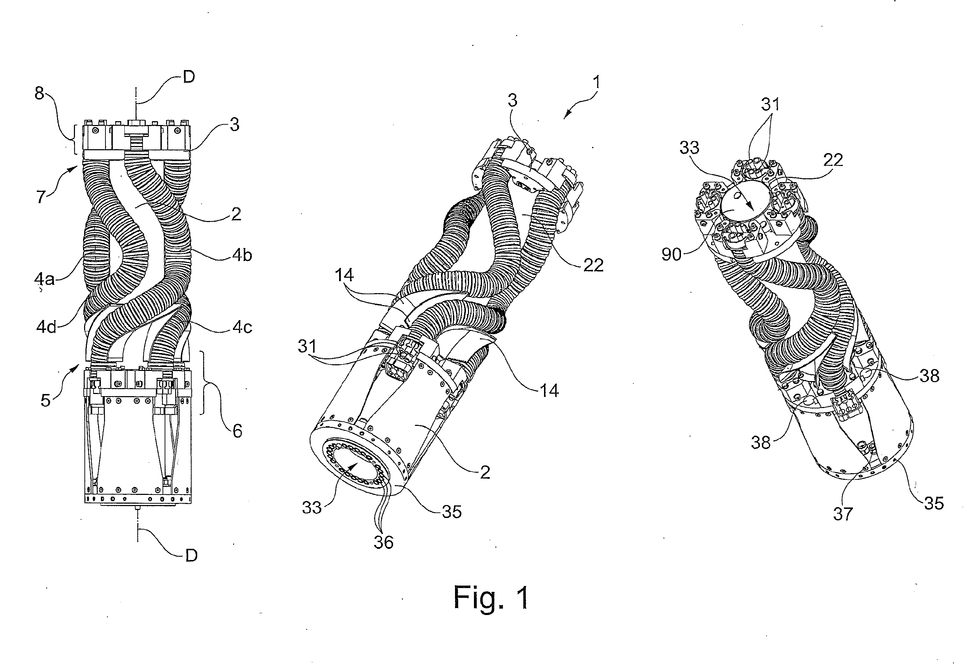

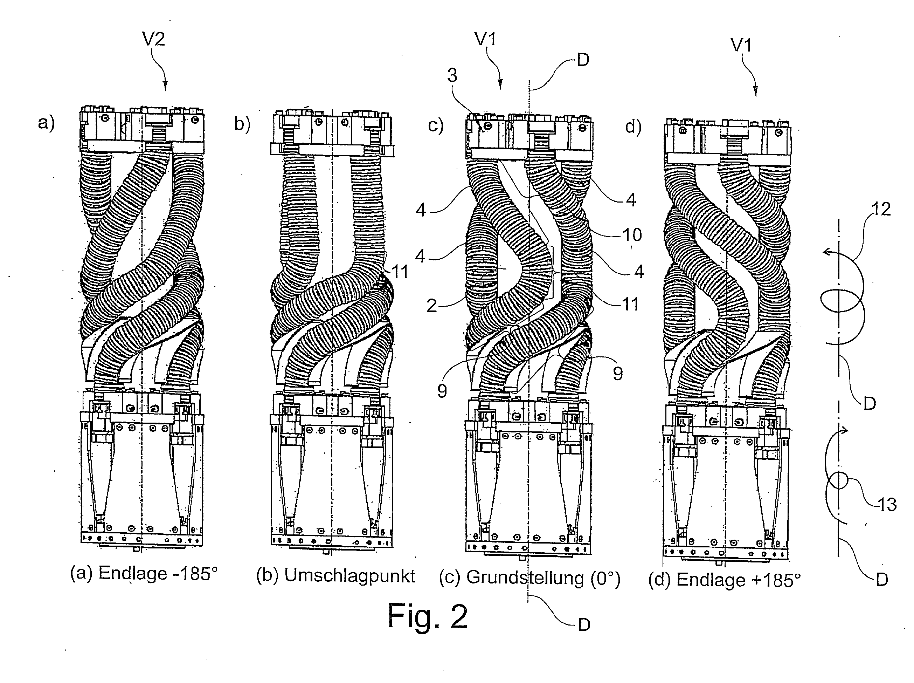

Fig. 1 zeigt ein Leitungsführungssystem 1 gemäß einer Ausführungsform der Erfindung. Das Leitungsführungssystem 1 weist einen ersten Körper 2 sowie einen zweiten Körper 3 auf, die gegeneinander um eine gemeinsame Drehachse D über einen Drehwinkelbereich verdrehbar sind, derart, dass das Leitungsführungssystem 1 aus einem ersten Verdrehungszustand V1 in einen zweiten Verdrehungszustand V2 überführbar ist (siehe Figur 2). Das Leitungsführungssystem weist mehrere elastische Führungsstränge 4 auf, in denen jeweils Versorgungsleitungen 31 geführt werden. Erste Enden 5 der Führungsstränge 4 sind in einem ersten Befestigungsbereich 6 am ersten Körper 2 befestigt. Zweite Enden 7 der Führungsstränge 4 sind in einem zweiten Befestigungsbereich 8 am zweiten Körper 3 befestigt. Der erste Befestigungsbereich 6 ist gegenüber dem zweiten Befestigungsbereich 8 hinsichtlich der Drehachse D axial beabstandet.

Wird der zweite Körper 3 gegenüber dem ersten Körper 2 um die Drehachse D verdreht, so verändern sich die geometrischen Formen der Verläufe der Führungsstränge 4 entlang der Außenseite des ersten Körpers 2 von dem ersten Befestigungsbereich 6 hin zu dem zweiten Befestigungsbereich 8. Fig. 2 zeigt verschiedene Verdrehungszustände des zweiten Körpers 3 gegenüber dem ersten Körper 2 und die entsprechenden geometrischen Formen der Verläufe der Führungsstränge 4.

Der in Fig. 1 gezeigte Verdrehungszustand entspricht dem in Fig. 2c gezeigten Verdrehungszustand, dem sogenannten "Grundstellungszustand". Im Grundstellungszustand weist jeder der Führungsstränge 4 ein erstes wendelförmiges Segment 9 und ein zweites wendelförmiges Segment 10 auf, die jeweils um die Drehachse D verlaufen (entlang der Außenseite des ersten Körpers 2) und über ein bogenförmiges Verbindungssegment 11 miteinander verbunden sind. Das erste wendelförmige Segment 9 verläuft entlang einer ersten Windungsrichtung 12, und das zweite wendelförmige Segment 10 verläuft entlang einer zweiten Windungsrichtung 13, die der ersten Windungsrichtung 12 entgegengesetzt ist, im Hinblick auf die Windungsrichtung um die zentrale Achse D

Wird der zweite Körper 3, ausgehend von dem in Fig. 2c) gezeigten Grundstellungszustand, um die Drehachse D im Uhrzeigersinn verdreht, so ergibt sich der in Fig. 2d) gezeigte Verdrehungszustand ("Endlagenzustand"). In diesem Verdrehungszustand sind die jeweiligen Längen der zweiten wendelförmigen Segmente 10 der Führungsstränge 4 vergrößert, verglichen zu den entsprechenden Längen der zweiten wendelförmigen Segmente 10 des in Fig. 2c) gezeigten Verdrehungszustands. Weiterhin liegen die Orte der bogenförmigen Verbindungssegmente 11 näher am ersten Befestigungsbereich 6, verglichen mit dem in Fig. 2c) gezeigten Verdrehungszustand. Dies bedeutet im Umkehrschluss, dass sich die Längen der ersten wendelförmigen Segmente 9 der Führungsstränge 10 jeweils entsprechend verkürzt haben.

Wird andererseits der zweite Körper 3 gegenüber dem ersten Körper 2, ausgehend von dem in Fig. 2c) gezeigten Grundstellungszustand, um die Drehachse D entgegen dem Uhrzeigersinn verdreht, so ergibt sich der in Fig. 2b) gezeigte Verdrehungszustand, in dem zwar immer noch bogenförmige Verbindungssegmente 11 vorhanden sind (deren Positionen den oberen Enden der ersten wendelförmigen Segmente 9 entsprechen), jedoch weniger "scharf" ausgebildet sind. Desweiteren haben sich die zweiten wendelförmigen Segmente 10 "aufgelöst" in dem Sinne, dass die Führungsstränge 4 nunmehr, ausgehend von den bogenförmigen Verbindungssegmenten 11, zu dem zweiten Befestigungsbereich 8 hin nahezu parallel zur Drehachse D entlang der Außenfläche des ersten Körpers 2 verlaufen.

Wird der zweite Körper 3, ausgehend von dem in Fig. 2b) gezeigten Verdrehungszustand, weiter entgegen dem Uhrzeigersinn um die Drehachse D gedreht, so ergibt sich der in Fig. 2a) gezeigte Verdrehungszustand, in welchem sich nun auch die bogenförmigen Verbindungselemente 11 aufgelöst haben, derart, dass jeder der Führungsstränge 4 einen jeweils insgesamt wendelförmigen Verlauf von dem ersten Befestigungsbereich 6 zu dem zweiten Befestigungsbereich 8 entlang der ersten Windungsrichtung 12 aufweist. Der in Fig. 2a) gezeigte Verdrehungszustand kann als zweiter Verdrehungszustand V2 bezeichnet werden, da in diesem Verdrehungszustand keine zweiten wendelförmigen Segmente 10 mehr vorhanden sind. Die in Figuren 2c) und 2d) gezeigten Verdrehungszustände können als erste Verdrehungszustände V1 bezeichnet werden, da in diesen Verdrehungszuständen zweite wendelförmige Segmente 10 vorhanden sind, wobei der in Fig. 2d) gezeigte Verdrehungszustand die für den zweiten Verdrehungszustand typischen Eigenschaften noch deutlicher hervortreten lässt als der in Fig. 2c) gezeigte Verdrehungszustand. Der in Fig. 2b) gezeigte Verdrehungszustand ist ein Zwischenzustand, der einen Umschlagspunkt veranschaulicht, der bei diesem Beispiel ca. 120° beträgt, und an dem sich die Windungsrichtung durch Auflösen des bogenförmigen Segments ändert.

Das Ändern der geometrischen Verläufe der Führungsstränge 4 entsprechend den jeweiligen Verdrehungszuständen ist problemlos möglich, da die Führungsstränge 4 eine biegsame Struktur aufweisen. Beispielsweise können die Führungsstränge 4 Führungsketten sein, die in drei Raumrichtungen bewegt werden können (beispielsweise sogenannte Triflex® R-Führungsketten).

Durch das in Figuren 2a) - 2d) beschriebene Verhalten der Führungsstränge 4 in den jeweiligen Verdrehungszuständen ist es möglich, entsprechende Durchmesser, die von den ersten wendelförmigen Segmenten 9 und den zweiten wendelförmigen Segmenten 10 ausgebildet werden, jeweils konstant zu halten. Dies wiederum hat den Vorteil, dass sich die radialen Abmessungen des Leitungsführungssystems 1 bei gegenseitigem Verdrehen des ersten und zweiten Körpers 2, 3 gegeneinander nicht ändern.

Wie in Figuren 1 und 2 zu sehen ist, sind an der Außenseite des ersten Körpers 2 mehrere Führungselemente 14 angebracht, die jeweils wendelförmig entlang der ersten Windungsrichtung 12 verlaufen. Die Führungselemente 14 sind so zwischen den Führungssträngen 4 angeordnet, dass den ersten Enden 5 der Führungsstränge 4 zugewandte Endabschnitte der Führungsstränge 4 sowohl im ersten Verdrehungszustand V1 als auch im zweiten Verdrehungszustand V2 einen wendelförmigen Verlauf entlang der ersten Windungsrichtung 12 aufweisen. Die Führungselemente 14 stellen somit sicher, dass der untere Teil der Führungsstränge 4 immer entlang der ersten Windungsrichtung 12 verläuft, und nie entlang der zweiten Windungsrichtung 13. Im Gegensatz hierzu können die den zweiten Enden 7 zugewandten Endabschnitte der Führungsstränge 4 sowohl entlang der ersten Windungsrichtung als auch entlang der zweiten Windungsrichtung verlaufen, entsprechend dem jeweiligen Verdrehungszustand. Wie Fig. 2d) zu entnehmen ist, markieren die dem zweiten Befestigungsbereich 8 zugewandten Enden der Führungselemente 14 jeweils die Positionen, bis zu denen die bogenförmigen Verbindungssegmente 11 maximal in Richtung des ersten Befestigungsbereichs 6 bewegt werden können.

Wie in Figuren 2a) - 2d) zu entnehmen ist, bilden die Führungselemente 14 in unterschiedlichen Verdrehungszuständen unterschiedliche Steigungen aus: In Verdrehungszuständen nahe dem Grundstellungszustand liegt jeder Führungsstrang 4 auf je einer Oberseite eines Führungselements 14 auf, wohingegen in Verdrehungszuständen, die weit von dem Grundstellungszustand entfernt sind, die Führungsstränge 4 von den Oberseiten der Führungselemente 14 abheben. Die Führungselemente 14 bewirken, dass die Führungsstränge 4 nicht bzw. nur zu einem sehr geringen Anteil aufeinander aufliegen, was aufgrund des hohen Eigengewichts der Führungsstränge 4 zu Quetschungen bzw. gegenseitigen Behinderungen führen könnte.

Das Leitungsführungssystem 1 weist an dessen unterem Ende einen mit dem ersten Körper 2 verbundenen Verteilerring 35 auf. In dem Verteilerring 35 sind Leitungsanschlüsse 36 vorgesehen, an die die Versorgungsleitungen 31 angeschlossen werden. Der Verteilerring 35 ist über Befestigungselemente 37 (z.B. Schrauben) mit dem ersten Körper 2 verbunden. Der erste Befestigungsbereich 6 weist Bohrungen 38 auf, über die die Befestigungselemente erreicht werden können. Somit muss der Verteilerring 35 nicht von der Gegenseite her an dem ersten Körper 2 befestigt werden.

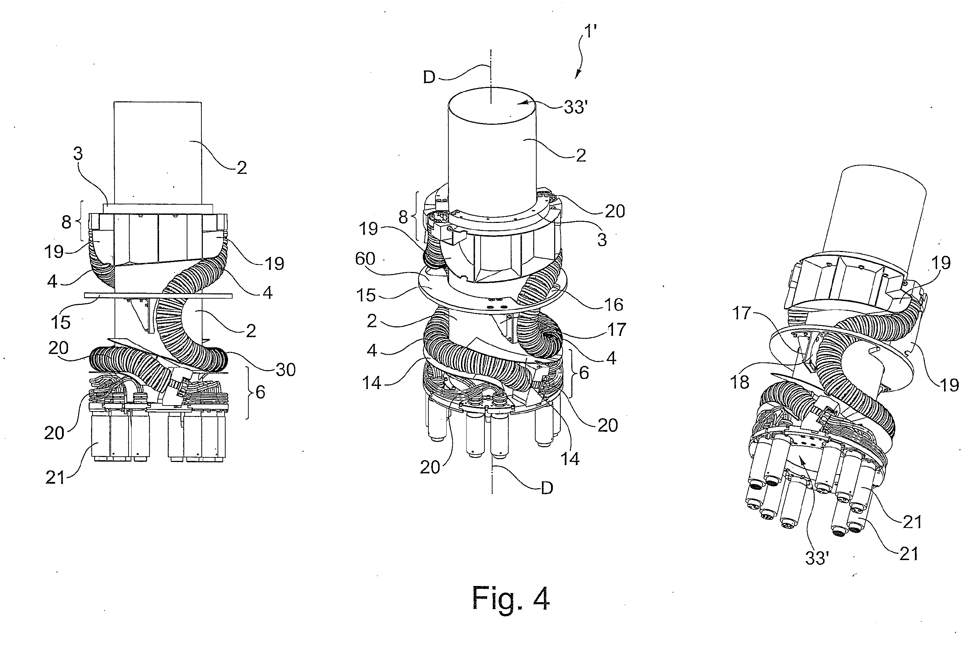

Fig. 4 zeigt eine weitere mögliche Ausführungsform des erfindungsgemäßen Leitungsführungssystems. Das in Fig. 4 gezeigte Leitungsführungssystem 1' entspricht in seinem Aufbau und Wirkungsprinzip im Wesentlichen dem Leitungsführungssystem 1, das in Figuren 1 und 2 gezeigt ist. Zusätzlich weist jedoch der zweite Körper 3 ein Führungselement 15 auf, das zwischen dem ersten Befestigungsbereich 6 und dem zweiten Befestigungsbereich 8 angeordnet ist. Das Führungselement 15 ist als loser Führungsring ausgestaltet, der sich konzentrisch um die Drehachse D bzw. konzentrisch um die Außenseite des ersten Körpers 2 herum erstreckt. Der Führungsring 15 weist Öffnungen 16 auf, wobei durch jede Öffnung 16 einer der Führungsstränge 4 verläuft. An einer der Seiten jeder Öffnung 16 ist jeweils ein weiteres Führungselement 17 angeordnet (an der Unterseite des Führungsrings 15). Die Führungselemente 17, die an dem lose drehbaren Führungsring befestigt sind, ragen von der Unterseite des Führungsrings 15 senkrecht nach unten und können an deren den Führungssträngen 4 zugewandten Flächen eine konkave Wölbung 18 aufweisen. Die Längen der Öffnungen 16 entlang des Führungsrings 15 sind so groß ausgestaltet (beispielsweise der zweifache Durchmesser eines Führungsstrangs 4), dass sich die Führungsstränge 4 relativ frei innerhalb der Öffnungen 16 bewegen können. Die Kombination aus langgestreckten Öffnungen 16, den Führungselementen 17 sowie deren konkaven Flächen 18 bewirkt, dass die Führungsstränge 4 gut zwischen dem ersten Verdrehungszustand und dem zweiten Verdrehungszustand hin- und hergeführt werden können. Der zweite Körper 3 weist im zweiten Befestigungsbereich 8 weitere Führungselemente 19 auf, die die zweiten Enden 7 der Führungselemente 4 beidseitig einfassen und ein gewisses Spiel der Führungsstränge 4 entlang einer Umfangsrichtung um die Drehachse D herum zulassen. Die Führungselemente 19 weisen jeweils einen zu den Führungssträngen 4 hingewandten konvexen Verlauf auf, an die sich die Führungsstränge 4 anschmiegen können. Im ersten Verdrehungszustand schmiegen sich die Führungsstränge 4 an jeweils ein Führungselement 19 an, und im ersten Verdrehungszustand an das jeweils andere. Somit kann ein zu starkes Verdrehen und Biegen der Führungsstränge 4 im zweiten Befestigungsbereich 8 vermieden werden.

Zu sehen sind in Fig. 4 weiterhin Versorgungsleitungen 20, die aus den unteren Enden 5 der Führungsstränge 4 austreten und in parallel zur Drehachse D angeordnete, mit dem ersten Körper 2 verbundene Leitungsaufnahmeelemente 21 eintreten.

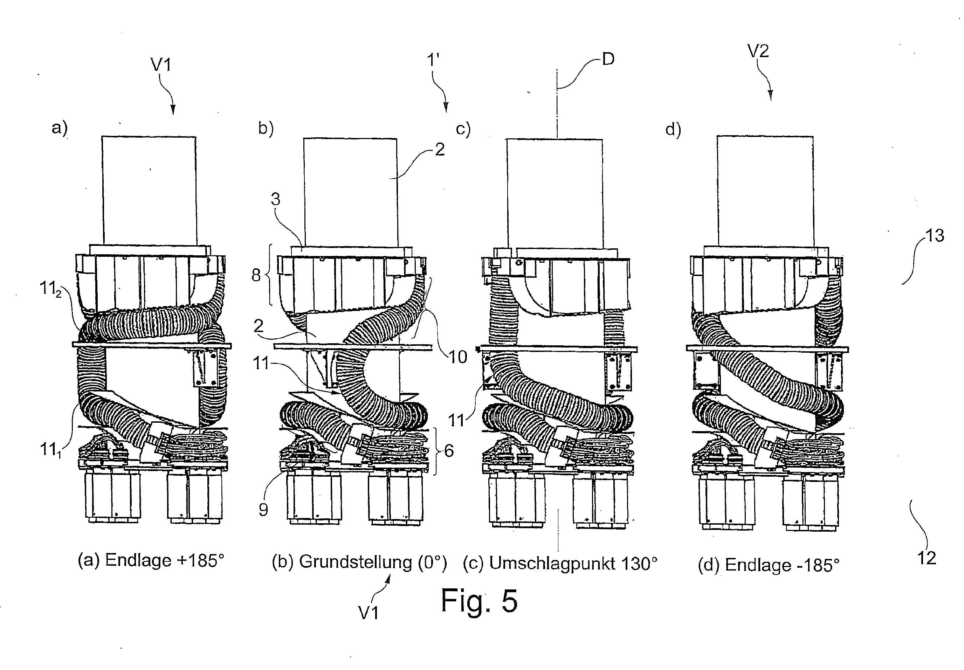

Fig. 5 zeigt analog zu Fig. 2 unterschiedliche Verdrehungszustände des Leitungsführungssystems 1'.

Der in Fig. 4 gezeigte Verdrehungszustand entspricht dem in Fig. 5b gezeigten Verdrehungszustand, dem "Grundstellungszustand". Im Grundstellungszustand weist jeder der Führungsstränge 4 ein erstes wendelförmiges Segment 9 und ein zweites wendelförmiges Segment 10 auf, die jeweils um die Drehachse D in einer Windungsrichtung verlaufen (entlang der Außenseite des ersten Körpers 2) und über ein bogenförmiges Verbindungssegment 11 miteinander verbunden sind. Das erste wendelförmige Segment 9 verläuft entlang einer ersten Windungsrichtung 12, und das zweite wendelförmige Segment 10 verläuft entlang einer zweiten Windungsrichtung 13, die der ersten Windungsrichtung 12 entgegengesetzt ist, was ihr Vorzeichen anbetrifft.

Wird der zweite Körper 3, ausgehend von dem in Fig. 5b) gezeigten Grundstellungszustand, um die Drehachse D entgegen dem Uhrzeigersinn verdreht, so ergibt sich der in Fig. 5a) gezeigte Verdrehungszustand ("Endlagenzustand"). In diesem Verdrehungszustand sind die jeweiligen Längen der zweiten wendelförmigen Segmente 10 der Führungsstränge 4 vergrößert, verglichen zu den entsprechenden Längen der zweiten wendelförmigen Segmente 10 des in Fig. 5b) gezeigten Verdrehungszustands. Weiterhin liegen die Orte der bogenförmigen Verbindungssegmente 11 näher am zweiten Befestigungsbereich 8, verglichen mit dem in Fig. 5b) gezeigten Verdrehungszustand. Dies bedeutet im Umkehrschluss, dass sich die Längen der ersten wendelförmigen Segmente 9 der Führungsstränge 4 jeweils entsprechend verkürzt haben. In dem in Figur 5a) gezeigten Verdrehungszustand "spaltet" sich das bogenförmige Verbindungssegment 11 in zwei Verbindungssegmente 11₁ und 11₂ auf, wobei sich das erste Verbindungssegment 11₁ an einem oberen Ende des entsprechenden Führungselements 14 befindet, und sich das zweite Verbindungssegment 11₂ an der entsprechenden Öffnung 16 des Führungselements 15 befindet. In diesem verdrehungszustand bewirkt das entsprechende Führungselement 19, dass sich der Führungsstrang 4 zwischen dem Führungselement 15 und dem zweiten Befestigungsbereich 8 nicht zu stark in Richtung des zweiten Befestigungsbereichs 8 wölbt.

Wird andererseits der zweite Körper 3 gegenüber den ersten Körper 2, ausgehend von dem in Fig. 5b) gezeigten Grundstellungszustand, um die Drehachse D im Uhrzeigersinn verdreht, so ergibt sich der in Fig. 5c) gezeigte Verdrehungszustand, in dem zwar immer noch bogenförmige Verbindungssegmente 11 vorhanden sind (deren Positionen den oberen Enden der ersten wendelförmigen Segmente 9 entsprechen), jedoch weniger "scharf" ausgebildet sind. Desweiteren haben sich die zweiten wendelförmigen Segmente 10 bei einem Umschlagspunkt von ca. 130° "aufgelöst" in dem Sinne, dass die Führungsstränge 4 nunmehr, ausgehend von den bogenförmigen Verbindungssegmenten 11, zu dem zweiten Befestigungsbereich 8 hin nahezu parallel zur Drehachse D entlang der Außenfläche des ersten Körpers 2 verlaufen.

Wird der zweite Körper 3, ausgehend von dem in Fig. 5c) gezeigten Verdrehungszustand, weiter im Uhrzeigersinn um die Drehachse D gedreht, so ergibt sich der in Fig. 5d) gezeigte Verdrehungszustand, in welchem sich nun auch die bogenförmigen Verbindungselemente 11 aufgelöst haben, derart, dass jeder der Führungsstränge 4 einen jeweils insgesamt wendelförmigen Verlauf von dem ersten Befestigungsbereich 6 zu dem zweiten Befestigungsbereich 8 entlang der ersten Windungsrichtung 12 aufweist.

Der in Fig. 5d) gezeigte Verdrehungszustand kann als zweiter Verdrehungszustand V2 bezeichnet werden, da in diesem Verdrehungszustand keine zweiten wendelförmigen Segmente 10 mehr vorhanden sind. Die in Figuren 5a) und 5b) gezeigten Verdrehungszustände können als erste Verdrehungszustände V1 bezeichnet werden, da in diesen Verdrehungszuständen zweite wendelförmige Segmente 10 vorhanden sind, wobei der in Fig. 5a) gezeigte Verdrehungszustand die für den zweiten Verdrehungszustand typischen Eigenschaften noch deutlicher hervortreten lässt als der in Fig. 5b) gezeigte Verdrehungszustand. Der in Fig. 5c) gezeigte Verdrehungszustand ist ein Zwischenzustand.

Fig. 5a) und 5d) ist zu entnehmen, dass der Führungsring 15 bei Überführen des Leitungsführungssystems 1' in den zweiten Verdrehungszustand V2 so gedreht wird, dass der Teil der Führungsstränge 4, der sich zwischen den Führungsring 15 und den zweiten Enden 7 der Führungsstränge 4 befindet, einen Teil der wendelförmigen Ausrichtung der Führungsstränge entlang der ersten Windungsrichtung 12 bildet, wobei der Führungsring 15 bei Überführen des Leitungsführungssystems 1' in den ersten Verdrehungszustand V1 so gedreht wird, dass der Teil der Führungsstränge 4, der sich zwischen dem Führungsring 15 und den zweiten Enden 7 der Führungsstränge 4 befindet, die zweiten wendelförmigen Segmente der Führungsstränge 4 entlang der zweiten Windungsrichtung 13 bildet.

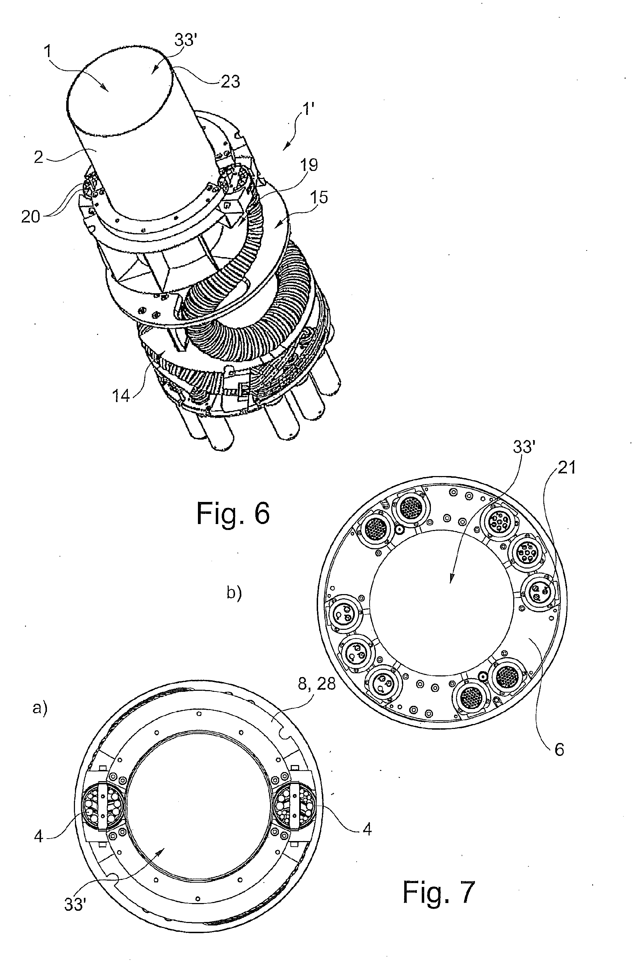

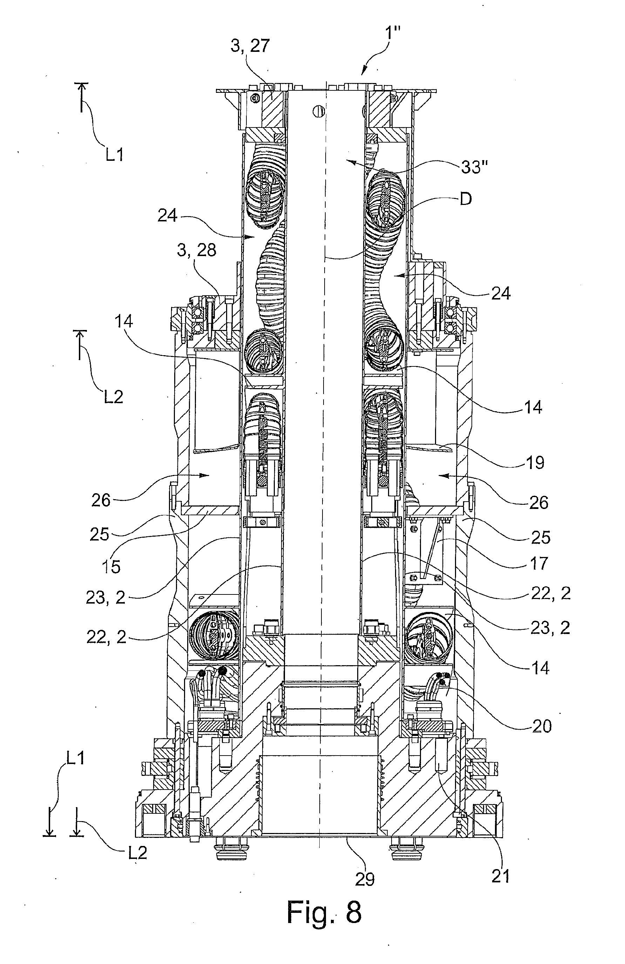

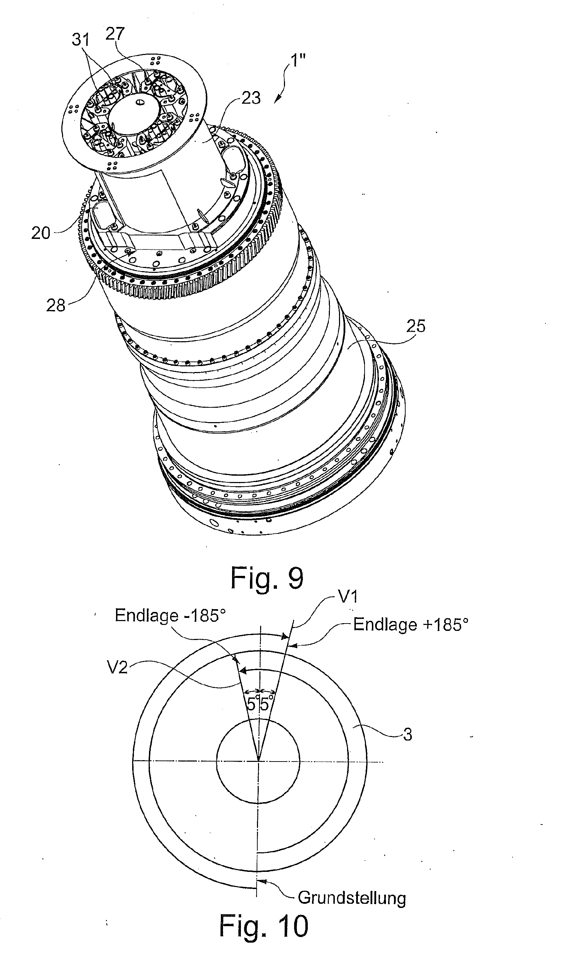

Gemäß einer Ausführungsform der Erfindung können das Leitungsführungssystem 1 und das Leitungsführungssystem 1' zu einem kombinierten Leitungsführungssystem 1" kombiniert werden, das in Figuren 8 und 9 gezeigt ist. Hierzu kann, wie in Figur 6 gezeigt ist, das Leitungsführungssystem 1 in das Innere des ersten Körpers 2 (Hohlkörper 23) des Leitungsführungssystems 1' eingeführt werden. Vorteilhaft ist, dass das Leitungsführungssystem 1 und das Leitungsführungssystem 1' jeweils separat vollständig vormontierbar sind, sodass lediglich das Leitungsführungssystem 1 in das Innere des ersten Körpers 2des Leitungsführungssystems 1' eingeführt werden muss. Somit kann sich eine Montagezeit dieses komplizierten Bauteils erheblich verkürzen, was Kosten spart.

In dieser Ausführungsform kann der erste Körper 2 einen ersten Hohlkörper 22 aufweisen, der um die Drehachse D herum ausgebildet ist, und einen zweiten Hohlkörper 23 aufweisen, der um den ersten Hohlkörper 22 herum ausgebildet ist. Wenigstens einer der Führungsstränge 4 verläuft innerhalb eines ersten Hohlraums 24, der zwischen dem ersten Hohlkörper 22 und dem zweiten Hohlkörper 23 ausgebildet ist. Der erste Körper 2 weist in dieser Ausführungsform einen dritten Hohlkörper 25 auf, der um den zweiten Hohlkörper 23 herum ausgebildet ist. Wenigstens einer der Führungsstränge 4 verläuft innerhalb eines zweiten Hohlraums 26, der zwischen dem zweiten Hohlkörper 23 und dem dritten Hohlkörper 25 ausgebildet ist. Innerhalb des ersten Hohlkörpers 22 kann bei Bedarf eine Antriebswelle einer Arbeitsspindel geführt werden, die kopfseitig 29 an der Vorrichtung 1" montiert wird. In dieser Ausführungsform ist eine Länge L1 des ersten und zweiten Hohlkörpers 22, 23 länger als eine Länge L2 des dritten Hohlkörpers 25.

In dieser Ausführungsform weist der zweite Körper 3 einen ersten Teil 27 auf, der am oberen Ende des ersten Hohlraums 24 angeordnet ist und drehbar um den ersten Hohlkörper 22 angeordnet ist (ringförmiges Element). An dem ersten Teil 27 sind die zweiten Enden 7 derjenigen Führungsstränge 4 befestigt, die innerhalb des ersten Hohlraums 24 verlaufen. Der zweite Körper 3 weist ferner einen zweiten Teil 28 auf, der am oberen Ende des zweiten Hohlraums 26 drehbar um den zweiten Hohlkörper 23 angeordnet ist, und an dem zweite Enden der Führungsstränge 4 befestigt sind, die durch den zweiten Hohlraum 26 hindurch verlaufen. Auch der zweite Teil 28 des zweiten Körpers 3 stellt ein ringförmiges Element dar.

Die Führungsstränge, die durch den ersten Hohlkörper 24 verlaufen, können Leitungen aufnehmen, die Medien transportieren, und die Führungsstränge 4, die durch den zweiten Hohlkörper 26 verlaufen, können Leitungen aufnehmen, die elektrische Signale transportieren. Dies ist insbesondere dann vorteilhaft, wenn die Führungsstränge, die elektrische Signale transportieren, sehr viele Kabel aufnehmen müssen, da das Verdrillen dieser Führungsstränge 4 nicht so leicht möglich ist wie das Verdrillen derjenigen Führungsstränge, die Medien transportieren. Da der zweite Hohlraum 26 weiter von der Drehachse D radial beabstandet ist als der erste Hohlraum 24, müssen die Führungsstränge 4, die Versorgungsleitungen zum Transport elektrischer Signale aufnehmen, nicht so stark verdrillt werden.

Fig. 9 zeigt das in Fig. 8 gezeigte Leitungsführungssystem 1" im montierten Zustand von außen. In dieser Ausführungsform beträgt die Anzahl der durch den ersten Hohlraum 24 geführten Führungsstränge 4. Weiterhin beträgt die Anzahl der durch den zweiten Hohlraum 26 geführten Führungsstränge 2.

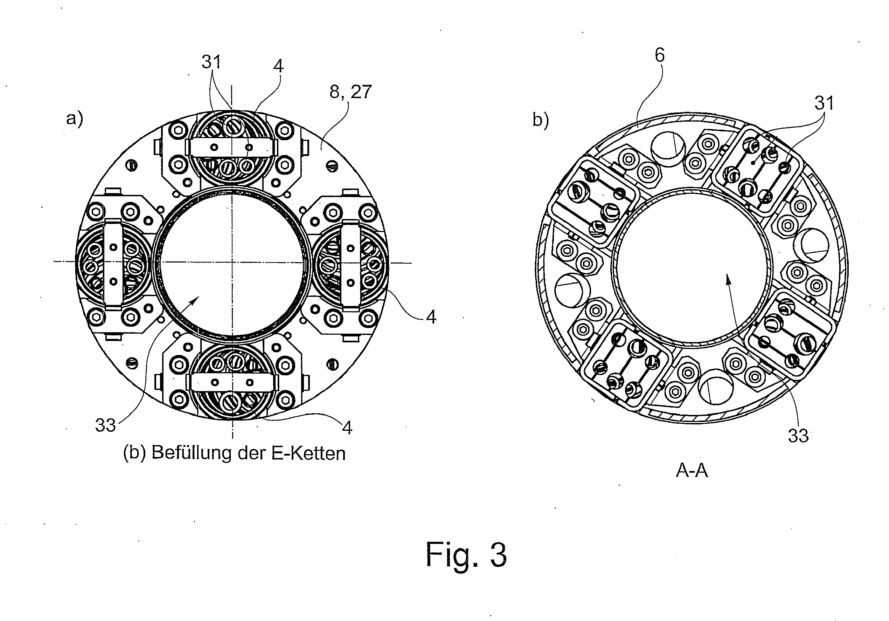

Entsprechend sind in Fig. 3a), die eine Draufsicht auf das obere Ende des zweiten Befestigungsabschnitts 8 des Leitungsführungssystems 1 zeigt, Enden von vier Führungssträngen 4 zu sehen. Zu sehen sind die innerhalb der Führungsstränge 4 angeordneten Versorgungsleitungen 31 zum Transportieren von Fluiden. Fig. 3b) zeigt eine Draufsicht auf einen Teil des ersten Befestigungsabschnitts 6 (Befestigungsring), an dem die unteren Enden der Versorgungsleitungen 31 befestigt sind, die innerhalb des ersten Hohlraums 24 verlaufen, Entsprechend hierzu zeigen Figuren 7a) und 7b) Teile des ersten Befestigungsabschnitts 6 und des zweiten Befestigungsabschnitts 8 des Leitungsführungssystems 1', an denen die innerhalb des zweiten Hohlraums 26 verlaufenden Führungsstränge 4 befestigt sind, innerhalb derer die Versorgungsleitungen 20 verlaufen.

Innerhalb des Innenraums 33" des ersten Hohlkörpers 22 des Leitungsführungssystems 1" kann eine Antriebswelle vorgesehen werden. Dies gilt analog für Innenräume 33/33' der ersten Körper 2 des Leitungsführungssystems 1/1', sollte dieser hohlförmig ausgestaltet sein.

## Patentansprüche

1. Leitungsführungssystem zur Aufnahme und Führung von Versorgungsleitungen zwischen einem ersten Körper und einem zweiten Körper, die gegeneinander um eine gemeinsame Drehachse über einen Drehwinkelbereich verdrehbar sind, derart, dass das Leitungsführungssystem aus einem ersten Verdrehungszustand in einen zweiten Verdrehungszustand überführbar ist, wobei das Leitungsführungssystem einen Führungsstrang aufweist, der die Versorgungsleitungen führt, dessen erstes Ende in einem ersten Befestigungsbereich am ersten Körper, und dessen zweites Ende in einem zweiten Befestigungsbereich am zweiten Körper befestigt ist, wobei der erste Befestigungsbereich und der zweite Befestigungsbereich hinsichtlich der gemeinsamen Drehachse axial voneinander beabstandet sind,
**dadurch gekennzeichnet,**
- **dass** eine Mehrzahl von elastischen Führungssträngen zur jeweiligen Aufnahme von Versorgungsleitungen vorgesehen ist, wobei jeweilige erste Enden der Führungsstränge in dem ersten Befestigungsbereich angeordnet sind, und jeweilige zweite Enden der Führungsstränge in dem zweiten Befestigungsbereich angeordnet sind,
- wobei die Führungsstränge so ausgelegt sind, dass diese bei Überführen des Leitungsführungssystems in den ersten Verdrehungszustand jeweils ein erstes wendelförmiges Segment und ein zweites wendelförmiges Segment ausbilden, die jeweils wenigstens teilweise um die Drehachse verlaufen und über ein bogenförmiges Verbindungssegment miteinander verbunden sind, wobei das erste wendelförmige Segment entlang einer ersten Windungsrichtung verläuft, und das zweite wendelförmige Segment entlang einer zweiten Windungsrichtung verläuft, die der ersten Windungsrichtung entgegengesetzt ist,
- wobei die Führungsstränge so ausgelegt sind, dass sich bei Überführen des Leitungsführungssystems in den zweiten Verdrehungszustand die jeweiligen bogenförmigen Verbindungssegmente auflösen, derart, dass die Führungsstränge einen jeweils insgesamt wendelförmigen Verlauf entlang der ersten Windungsrichtung aufweisen.

2. Leitungsführungssystem nach Anspruch 1,
wobei der Drehwinkelbereich wenigstens 370° von -185° nach +185°beträgt.

3. Leitungsführungssystem nach Anspruch 2,
wobei der Umschlagspunkt, an dem sich die bogenförmigen Verbindungssegmente auflösen, im Bereich zwischen 100° und 150° liegt.

4. Leitungsführungssystem nach einem der Ansprüche 1 bis 3,
wobei die Führungsstränge Führungsketten sind, die in drei Raumrichtungen bewegt werden können.

5. Leitungsführungssystem nach einem der Ansprüche 1 bis 4,
wobei bei Verdrehen des ersten und zweiten Körpers gegeneinander entsprechende Wendel-Durchmesser, die von den ersten wendelförmigen Segmenten und den zweiten wendelförmigen Segmenten ausgebildet werden, jeweils konstant bleiben.

6. Leitungsführungssystem nach einem der Ansprüche 1 bis 5,
mit einer Mehrzahl von Führungselementen, die jeweils mit dem ersten Körper verbunden sind und wendelförmig entlang der ersten Windungsrichtung verlaufen, wobei die Führungselemente so ausgestaltet und angeordnet sind, dass den ersten Enden zugewandte Endabschnitte der Führungsstränge sowohl im ersten Verdrehungszustand als auch im zweiten Verdrehungszustand einen wendelförmigen Verlauf entlang der ersten Windungsrichtung aufweisen.

7. Leitungsführungssystem nach Anspruch 6,
wobei die Führungselemente so angeordnet sind, dass im ersten Verdrehungszustand jeder Führungsstrang auf je einem der Führungselemente aufliegt, und dass bei Überführen des ersten Verdrehungszustands in den zweiten Verdrehungszustand die Führungsstränge von den Führungselementen abheben.

8. Leitungsführungssystem nach einem der Ansprüche 1 bis 7,
wobei der erste Körper einen ersten Hohlkörper aufweist, der um die Drehachse herum ausgebildet ist, und einen zweiten Hohlkörper aufweist, der um den ersten Hohlkörper herum ausgebildet ist, wobei wenigstens einer der Führungsstränge innerhalb eines ersten Hohlraums verläuft, der zwischen dem ersten Hohlkörper und dem zweiten Hohlkörper ausgebildet ist.

9. Leitungsführungssystem nach Anspruch 8,
wobei wenigstens einer der Führungsstränge auf einer Außenseite des zweiten Hohlkörpers verläuft.

10. Leitungsführungssystem nach einem der Ansprüche 8 bis 9,
wobei der erste Körper einen dritten Hohlkörper aufweist, der um den zweiten Hohlkörper herum ausgebildet ist, und wenigstens einer der Führungsstränge innerhalb eines zweiten Hohlraums verläuft, der zwischen dem zweiten Hohlkörper und dem dritten Hohlkörper ausgebildet ist.

11. Leitungsführungssystem nach Anspruch 10,
wobei der erste und zweite Hohlkörper jeweils länger ist als der dritte Hohlkörper.

12. Leitungsführungssystem nach einem der Ansprüche 8 bis 11,
- wobei der zweite Körper einen ersten Teil aufweist, der innerhalb des ersten Hohlraums drehbar um den ersten Hohlkörper angeordnet ist, und an dem ein zweites Ende wenigstens eines Führungsstrangs befestigt ist, und
- wobei der zweite Körper einen zweiten Teil aufweist, der innerhalb des zweiten Hohlraums drehbar um den zweiten Hohlkörper angeordnet ist, und an dem ein zweites Ende wenigstens eines Führungsstrangs befestigt ist.

13. Leitungsführungssystem nach einem der Ansprüche 8 bis 12,
wobei die Führungsstränge, die durch den ersten Hohlkörper verlaufen, Leitungen aufnehmen, die Medien transportieren, und wobei die Führungsstränge, die durch den zweiten Hohlkörper verlaufen, Leitungen aufnehmen, die elektrische Signale transportieren, und/oder
wobei die Führungsstränge, die durch den ersten Hohlkörper verlaufen, sowohl im ersten als auch im zweiten Verdrehungszustand parallel zueinander verlaufen, und wobei die Führungsstränge, die durch den zweiten Hohlkörper verlaufen, sowohl im ersten als auch im zweiten Verdrehungszustand parallel zueinander verlaufen.

14. Leitungsführungssystem nach einem der Ansprüche 1 bis 13,
wobei der zweite Körper ein Führungselement aufweist, das zwischen den zweiten Enden und den ersten Enden der Führungsstränge angeordnet ist, wobei das Führungselement so ausgestaltet ist, dass durch Drehen des Führungselements die jeweiligen Orte in der Führungssträngen, an denen die ersten wendelförmigen Segmente in die zweiten wendelförmigen Segmente übergehen, geändert werden.

15. Werkzeugmaschine, mit einem Leitungsführungssystem nach einem der Ansprüche 1 bis 14.
